# EUROPEAN PATENT SPECIFICATION

(11) **EP 2 434 676 B1**
(45) Date of publication and mention of the grant of the patent: **10.04.2019**
(21) Application number: 10791614.0
(22) Date of filing: 30.06.2010
(51) Int. Cl.: H04L 1/00

(54) **METHOD AND APPARATUS FOR FILTERING A CHANNEL QUALITY INDICATOR**
VERFAHREN UND VORRICHTUNG ZUR FILTERUNG EINES KANALQUALITÄTSINDIKATORS
PROCÉDÉ ET DISPOSITIF DE FILTRAGE D'INDICATEUR DE QUALITÉ DE VOIE

(30) Priority: 31.12.2009 CN 200910260735
(43) Date of publication of application: 28.03.2012
(73) Proprietor: ZTE Corporation, Shenzhen, Guangdong 518057 (CN)
(72) Inventor: WANG, Guozheng, Shenzhen Guangdong 518057 (CN)
(74) Representative: AWA Sweden AB
(86) International application number: PCT/CN2010/074851
(87) International publication number: WO 2010/149108

(56) References cited:
- EP-A2- 2 073 417
- WO-A1-2009/125591
- CN-A- 101 022 299
- CN-A- 101 359 951
- CN-A- 101 729 208
- US-A1- 2004 266 358
- US-A1- 2005 227 697
- US-A1- 2007 237 069

## Description

### Technical Field

The present invention relates to the field of high speed downlink packet access and high speed packet access evolved mobile communication technology, and more especially, to method and apparatus for filtering channel quality indicator (CQI), and a method and apparatus for data transmission.

### Background of the Related Art

High Speed Downlink Packet Access (HSDPA) is an enhanced downlink technology introduced in the R5 protocol of 3^{rd} Generation Partnership Project (3GPP) of Wideband Code Division Multiple Access (WCDMA) standard organization. By using key technologies such as adaptive modulation and coding (AMC), hybrid automatic retransmission request (HARQ) and high speed scheduling, the HSDPA increases the downlink data transmission speed, moreover, it introduces three new physical channels: high speed physical downlink shared channel (HS-PDSCH), high speed shared control channel (HS-SCCH), and uplink high speed dedicated physical control channel (HS-DPCCH).

HSPA+ is an evolution on the basis of HSDPA, and the new technologies introduced in the HSPA+ comprise downlink quadrature amplitude modulation (QAM) 64, multiple input multiple output (MIMO), continuous connectivity for packet data users (CPC), multi-carrier technology, and so on. The HSPA+ further increases the downlink user peak speed and improves the network performance.

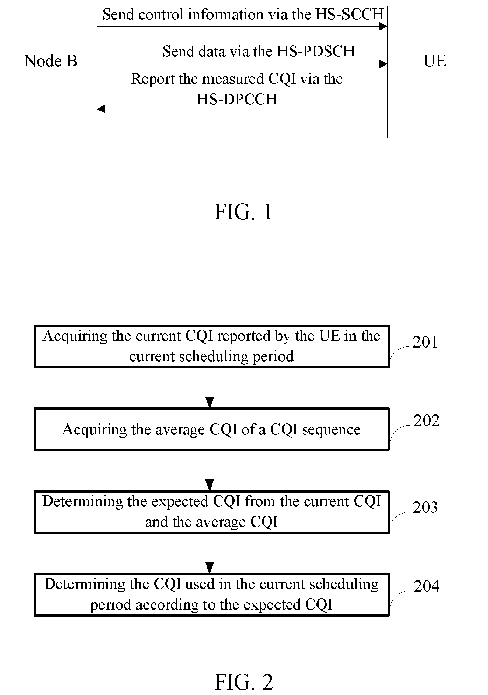

Both HSDPA and HSPA+ use AMC technology, and the basic principle of the AMC technology is: a user equipment (UE) feeds back its measured channel quality indicator (CQI) to a node B via the HS-DPCCH, after the node B receives the CQI, it selects a suitable transmission block according to the CQI and sends the data to the UE via the HS-PDSCH, the corresponding control information is sent in the HS-SCCH, and the specific data transmission process is as shown in FIG. 1.

It can be seen that the CQI accuracy directly affects the HS-PDSCH decoding and further affects the network performance. If the CQI is relatively lower than the practical channel quality, although the HS-PDSCH decoding successful rate is high, the transmission block selected by the node B is relatively low and the speed is also relatively low; if the CQI is relatively higher than the practical channel quality, the block error rate (BLER) of the HS-PDSCH also increases and thus the speed decreases. Therefore, it is very important to guarantee the accuracy of the CQI, and the factors affecting the accuracy of the CQI are mainly as follows:
(1) In the existing wireless standard organization protocol, the requirements for the UE measuring the CQI is: the CQI reported by the UE should be in the range of the median CQI plus or minus 2 with no less than 90% possibility, therefore, in the same channel environment, the CQIs reported by different UEs might be different, moreover, the CQIs reported by the same UE might also have relatively large variance;
(2) The UE measures the CQI and reports it to the Node B via the HS-DPCCH, the Node B decodes the CQI and uses the CQI to select a transmission block, and this process has a 6-8ms delay, so it might not be able to accurately reflect the situation of the wireless channel;
(3) There might be some decoding error in the process of the Node B decoding the CQI, for example, the CQI reported by the UE is 10, but the Node B decode the CQI as 22 by mistake.

To sum up, right now, the CQI acquired by the Node B might be not accurate enough, and thus affect the HSDPA performance.

The document US2005/227697A1 discloses techniques for channel prediction in wireless networks. A base station receives a succession of channel indicators from each of plurality of mobile units, each channel indicator being received from mobile unit once per timeslot.

The document US2007/237069A1 discloses a multi-step predication method for adaptive transmission in an OFDM/FDD system. A channel prediction is performed considering a time varying characteristic of a channel changing within one slot, in addition to feedback and processing delay time between a transmitter and a receiver, and adaptive transmission is performed.

The document US2004/266358A1 discloses a method for biasing signal-to-interference ratio (SIR) to generate channel quality indicator (CQI), which includes measuring the packet error rate (PER) of a received signal and comparing the PER to the target PER to generate a correction term.

The document EP2073417A2 discloses methods for feeding back channel quality indication in a communication system.

### Content of the Invention

The embodiment of the present invention provides a method according to claim 1 and apparatus according to claim 4 for filtering channel quality indicator to improve the accuracy of the CQI, thus to improve the HSDPA performance. Further improvements and embodiments are provided in the dependent claims.

Also provided is a method for filtering channel quality indicator, and the method comprises:
acquiring a current channel quality indicator reported by a user equipment in a current scheduling period;
acquiring an average channel quality indicator of a channel quality indicator sequence, wherein, said channel quality indicator sequence comprises at least two channel quality indicators reported by the user equipment before said current scheduling period;
determining an expected channel quality indicator from said current channel quality indicator and the average channel quality indicator according to variation characteristic of said channel quality indicator sequence; and
determining the channel quality indicator used in the current scheduling period according to the expected channel quality indicator.

The step of determining the expected channel quality indicator comprises:
determining monotonicity of said channel quality indicator sequence; and
when said channel quality indicator sequence is monotonically increasing according to time sequence, determining the larger value in said current channel quality indicator and said average channel quality indicator as the expected channel quality indicator;
when said channel quality indicator sequence is monotonically decreasing according to the time sequence, determining the smaller value in said current channel quality indicator and said average channel quality indicator as the expected channel quality indicator;
when said channel quality indicator sequence is neither monotonically increasing nor monotonically decreasing according to the time sequence, determining said average channel quality indicator as the expected channel quality indicator.

The step of determining the channel quality indicator used in the current scheduling period comprises:
comparing a preset value with a difference between said expected channel quality indicator and a channel quality indicator used in a previous scheduling period; and
when said difference is larger than the preset value, determining a sum of the channel quality indicator used in the previous scheduling period and the preset value as the channel quality indicator used in the current scheduling period;
when said difference is no larger than the preset value, determining said expected channel quality indicator as the channel quality indicator used in the current scheduling period.

Also provided is an apparatus for filtering channel quality indicator, and the apparatus comprises:
a decoding unit, configured to: acquire a current channel quality indicator reported by a user equipment in a current scheduling period;
an obtaining unit, configured to obtain an average channel quality indicator of a channel quality indicator sequence, wherein, said channel quality indicator sequence comprises at least two channel quality indicators reported by the user equipment before the current scheduling period;
a first determining unit, configured to: determine an expected channel quality indicator from said current channel quality indicator and the average channel quality indicator according to variation characteristic of said channel quality indicator sequence; and
a second determining unit, configured to: determine the channel quality indicator used in the current scheduling period according to said expected channel quality indicator.

The first determining unit comprises:
a judging subunit, configured to: judge monotonicity of said channel quality indicator sequence; and
a determining subunit, configured to: determine the larger value in said current channel quality indicator and said average channel quality indicator as the expected channel quality indicator when said channel quality indicator sequence is monotonically increasing according to time sequence; determine the smaller value in said current channel quality indicator and said average channel quality indicator as the expected channel quality indicator when said channel quality indicator sequence is monotonically decreasing according to the time sequence; determine said average channel quality indicator as the expected channel quality indicator when said channel quality indicator sequence is neither monotonically increasing nor monotonically decreasing according to the time sequence.

The second determining unit comprises:
a comparing unit, configured to: compare a preset value with a difference between said expected channel quality indicator and a channel quality indicator used in a previous scheduling period; and
a determining subunit, configured to: when said difference is larger than the preset value, determine a sum of the channel quality indicator used in the previous scheduling period and the preset value as the channel quality indicator used in the current scheduling period; when said difference is no larger than the preset value, determine said expected channel quality indicator as the channel quality indicator used in the current scheduling period.

Also provided is a method for data transmission, and the method comprises:
acquiring a current channel quality indicator reported by a user equipment in a current scheduling period and an average channel quality indicator of a channel quality indicator sequence, wherein, said channel quality indicator sequence comprises at least two channel quality indicators reported by the user equipment before said current scheduling period;
determining an expected channel quality indicator from said current channel quality indicator and the average channel quality indicator according to variation characteristic of said channel quality indicator sequence, and determining the channel quality indicator used by the current scheduling period according to the expected channel quality indicator; and
applying a transmission block corresponding to the channel quality indicator used in the current scheduling period to send data.

The step of determining the expected channel quality indicator comprises:
determining monotonicity of said channel quality indicator sequence; and
when said channel quality indicator sequence is monotonically increasing according to time sequence, determining the larger value in said current channel quality indicator and said average channel quality indicator as the expected channel quality indicator;
when said channel quality indicator sequence is monotonically decreasing according to the time sequence, determining the smaller value in said current channel quality indicator and said average channel quality indicator as the expected channel quality indicator;
when said channel quality indicator sequence is neither monotonically increasing nor monotonically decreasing according to the time sequence, determining said average channel quality indicator as the expected channel quality indicator.

The step of determining the channel quality indicator used in the current scheduling period comprises:
comparing a preset value with a difference between said expected channel quality indicator and a channel quality indicator used in a previous scheduling period; and
when said difference is larger than the preset value, determining a sum of the channel quality indicator used in the previous scheduling period and the preset value as the channel quality indicator used in the current scheduling period;
when said difference is no larger than the preset value, determining said expected channel quality indicator as the channel quality indicator used in the current scheduling period.

Also provided is an apparatus for data transmission, and the apparatus comprises:
an obtaining unit, configured to: obtain a current channel quality indicator reported by a user equipment in a current scheduling period and an average channel quality indicator of a channel quality indicator sequence, wherein, said channel quality indicator sequence comprises at least two channel quality indicators reported by the user equipment before said current scheduling period;
a determining unit, configured to: determine an expected channel quality indicator from said current channel quality indicator and the average channel quality indicator according to variation characteristic of said channel quality indicator sequence; and determine the channel quality indicator used in the current scheduling period according to the expected channel quality indicator; and
a sending unit, configured to: use a transmission block corresponding to the channel quality indicator used in the current scheduling period to send data.

Said determining unit comprises:
a judging subunit, configured to: judge monotonicity of said channel quality indicator sequence; and
a first determining subunit, configured to: when said channel quality indicator sequence is monotonically increasing according to time sequence, determine the larger value in said current channel quality indicator and said average channel quality indicator as the expected channel quality indicator; when said channel quality indicator sequence is monotonically decreasing according to the time sequence, determine the smaller value in said current channel quality indicator and said average channel quality indicator as the expected channel quality indicator; when said channel quality indicator sequence is neither monotonically increasing nor monotonically decreasing according to the time sequence, determine said average channel quality indicator as the expected channel quality indicator.

Said determining unit comprises:
a comparing subunit, configured to: compare a preset value with a difference between said expected channel quality indicator and a channel quality indicator used in a previous scheduling period; and
a second determining subunit, configured to: when said difference is larger than the preset value, determine a sum of the channel quality indicator used in the previous scheduling period and the preset value as the channel quality indicator used in the current scheduling period; when said difference is no larger than the preset value, determine said expected channel quality indicator as the channel quality indicator used in the current scheduling period.

In the process of filtering CQI provided by the embodiment of the present invention, the current CQI reported by a UE in the current scheduling period is acquired, and the average CQI of a CQI sequence is acquired, wherein said CQI sequence comprises at least two CQIs reported by the UE before said current scheduling period, the expected CQI is determined from the current CQI and the average CQI according to the variation characteristic of said CQI sequence, and finally, the CQI used in the current scheduling period is determined according to the expected CQI. Therefore, the deviation in CQI due to the reporting process by the UE and the transmission can effectively reduced, and the CQI decoding error can be significantly filtered, thus to improve the accuracy of the CQI, and the HSDPA performance can be effectively improved after applying the transmission block corresponding to the CQI used in the current scheduling period to send the data.

### Brief Description of Drawings

FIG. 1 illustrates the HSDPA data transmission in the prior art;
FIG. 2 is a flow chart of the Node B filtering the CQI in the present invention;
FIG. 3 is a flow chart of the Node B filtering the CQI in accordance with the first embodiment of the present invention;
FIG. 4 is a structural diagram of the apparatus for filtering CQI in the present invention;
FIG. 5 is a structural diagram of the apparatus for data transmission in the present invention.

### Preferred Embodiments of the Present Invention

The embodiment of the present invention provides a method for filtering CQI by one Node B, and the method is applied to the HSDPA or HSPA+ system to suppress the relatively large deviation in the reported CQI, improve the reaction of the CQI to the current channel condition, filter the CQI decoding error and thus improve the HSDPA performance.

Refer to FIG. 2, the process of Node B filtering CQI includes:
Step 201: Acquiring the current CQI reported by the UE in the current scheduling period.

In this embodiment of the present invention, in each scheduling period of the Node B, the UE reports every measured CQI to the Node B via the HS-DPCCH. The larger the CQI value, the higher the channel quality.

Herein, the current scheduling period is called n, the Node B decodes the CQI reported by the UE via the HS-DPCCH to acquire the CQI corresponding to the current scheduling period, that is, the current CQI, denoted as CQIₙ.

Step 202: Acquiring the average CQI of a CQI sequence, wherein the CQI sequence includes at least two CQIₛ reported by the UE before the current scheduling period.

Herein, averaging the two or more CQIs reported by the UE before the current scheduling period to acquire the average CQI of the CQI sequence.

In each scheduling period before the current scheduling period, the UE reports the CQI to the Node B via the HS-DPCCH. Therefore, the Node B acquires the CQI reported by the UE in each scheduling period before the current scheduling period. Herein, the Node B averages the previous two or more *CQIₛ* to acquire the average CQI, denoted as *CQIₛ,* the average CQI of the CQI sequence. That is, sliding window processing is applied in the embodiment of the present invention to filter the CQI deviation.

For example, average the *m* CQIₛ, respectively *CQI*_{*n*-1}, *CQI*_{*n*-2}, ..., *CQIₙ₋ₘ,* reported by the UE before the current scheduling period *n* to acquire*CQIₛ*, that is, *CQIₛ*=(*CQI*_{*n*-1}+*CQI*_{*n*-2}+...+ *CQIₙ₋ₘ*)/*m*. Alternatively, average the *m* CQI, respectively *CQI*_{*n*-2}, *CQI*_{*n-*4}, ..., *CQI*_{*n-*2*m*}, reported by the UE before the current scheduling period *n* to acquire *CQIₛ,* that is, *CQIₛ* =(*CQI*_{*n*-2}+*CQI*_{*n*-4}+ *...,*+*CQI*_{*n*-2}*ₘ)*/*m.* Here, *m* is the size of the sliding window.

Step 203: determining the expected CQI from the current CQI and the average CQI according to the variation characteristic of the CQI sequence.

Herein, the Node B judges the monotonicity of the abovementioned CQI sequence, when this sequence is monotonically increasing according to the time sequence, it indicates that the signal quality is better and better, therefore, the larger value in the current CQI and the average CQI is determined as the expected CQI; when this sequence is monotonically decreasing according to the time sequence, it indicates that the signal quality is worse and worse, therefore, the smaller value in the current CQI and the average CQI is determined as the expected CQI; otherwise, that is, the abovementioned CQI sequence has no monotonicity, the average CQI is determined as the expected CQI.

For example, judge the monotonicity of a CQI sequence including *m* CQI, *CQI*_{*n*-1}, *CQI*_{*n*-2}, ..., *CQIₙ₋ₘ*, when *CQI*_{*n*-1}>*CQI*_{*n-*2}>...*>CQI*_{*n*-*m*}, the CQI sequence is determined as monotonically increasing according to the time sequence, and the expected CQI is the larger value in the current CQI and the average CQI, denoted as *CQI*'*ᵤₛₑ*(*n*)=max(*CQIₙ*, *CQIₛ*), wherein, *CQI'ᵤₛₑ*(*n*) is the expected CQI.

When *CQI*_{*n*-1}<*CQI*_{*n*-2}<...<*CQIₙ₋ₘ*, determining the sequence as monotonically decreasing according to the time sequence, and the expected CQI is the smaller value in the current CQI and the average CQI, the expected CQI is denoted as *CQI*^{'}*ᵤₛₑ*(*n*)=min(*CQIₙ*,*CQIₛ*), wherein, *CQI'ᵤₛₑ*(*n*) is the expected CQI.

When there is no monotonicity in *CQI*_{*n*-}1, *CQI*_{*n*-2},..., *CQI*_{*n*-*m*}, the expected CQI is the average CQI. The expected CQI is denoted as *CQI'ᵤₛₑ*(*n*)=*CQIₛ*.

With the above monotonicity processing, it can rapidly adapt to the gully change of CQI during the handoff, and thus improve the performance of handoff region in the HSDPA or HSPA+ system.

Step 204: Determine the CQI used in the current scheduling period according to the expected CQI.

Herein, the Node B can directly determine the expected CQI as the CQI used in the current scheduling period.

In the embodiment of the present invention, in order to filter the evident CQI decoding error, the Node B can also apply the maximum value in processing, including:

Comparing the preset value with the difference of the expected CQI and the CQI used in the previous scheduling period, and when the difference is larger than the preset value, determining the sum of the CQI used in the previous scheduling period and the preset value as the CQI used in the current scheduling period; otherwise, determining the expected CQI as the CQI used in the current scheduling period.

Herein, the expected CQI in each scheduling period is *CQI'ᵤₛₑ*(*n*), and the corresponding CQI in use is *CQIᵤₛₑ*(*n*). The preset value may be K, when *CQI'ᵤₛₑ*(*n*)-*CQIᵤₛₑ*(*n*-1) > *K*, *CQIᵤₛₑ*(*n*) = *CQIᵤₛₑ*(*n* - 1) + *K*. When *CQI'ᵤₛₑ*(*n*)-*CQIᵤₛₑ*(*n*-1) ≤ *K*, *CQIᵤₛₑ*(*n*) = *CQI'*ᵤₛₑ(*n*).

In the embodiment of the present invention, after determining the *CQIᵤₛₑ*(*n*) used in the current scheduling period, Node B selects a suitable transmission block to send data to the UE via the HS-PDSCH according to the determined *CQIᵤₛₑ*(*n*), the corresponding control information is sent in the HS-SCCH to implement the HSDPA data transmission.

It can be seen that the embodiment of the present invention also provides a method for data transmission, and the method comprises: first, acquiring the current CQI reported by the UE in the current scheduling period and the average CQI of a CQI sequence, wherein, said CQI sequence comprises at least two CQIs reported by the UE before the current scheduling period; second, determining the expected CQI from said current CQI and the average CQI according to the variation characteristic of said CQI sequence, and determining the CQI used in the current scheduling period according to said expected CQI; finally, applying the transmission block corresponding to the CQI used in the current scheduling period to send data, wherein determining the expected CQI comprises: Determining the monotonicity of said CQI sequence; when said CQI sequence is monotonically increasing according to the time sequence, determining the larger value in said current CQI and said average CQI as the expected CQI; when said CQI sequence is monotonically decreasing according to the time sequence, determining the smaller value in said current CQI and said average CQI as the expected CQI; when said CQI sequence is not monotonically increasing or decreasing according to the time sequence, determining said average CQI as the expected CQI.

Determining the CQI used in the current scheduling period comprises:
Comparing the preset value with the difference between said expected CQI and the CQI used in the previous scheduling period; when said difference is larger than the preset value, determining the sum of the CQI used in the previous scheduling period and the preset value as the CQI used in the current scheduling period; otherwise, determining said expected CQI as the CQI used in the current scheduling period.

Therefore, in the embodiment of the present invention, the Node B might apply the abovementioned steps 201-204 to determine the *CQIᵤₛₑ*(*n*) used in the current scheduling period, and then according to the determined *CQIᵤₛₑ*(*n*), select a suitable transmission block to send data to the UE via the HS-PDSCH, the corresponding control information is sent in the HS-SCCH to implement the HSDPA data transmission.

The embodiments of the present invention will be described in further detail in combination with the accompanying figures.

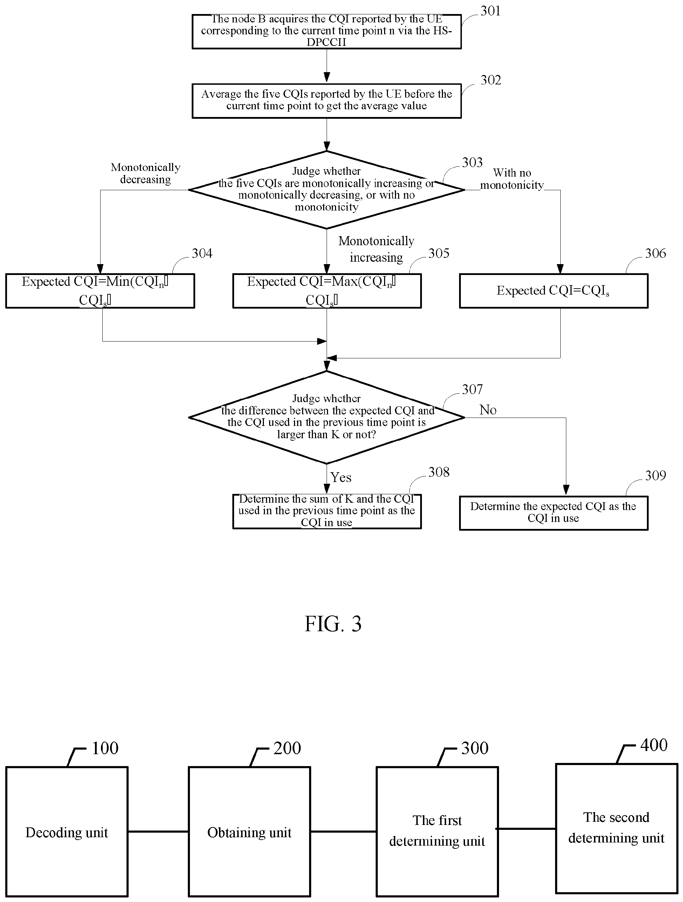

The first embodiment: in this embodiment, the scheduling period is 2ms, the size of sliding window m=5, and the preset value K=4. Refer to FIG. 3, in the HSDPA system, the process of the Node B filtering the CQI comprises:
Step 301: the Node B acquires the CQI reported by UE via the HS-DPCCH in the current scheduling period, the CQI is denoted as *CQIₙ*.
Step 302: Five CQIs reported by the UE before the current scheduling period *n* make up a CQI sequence, get the average value of the sequence, and the average value is denoted as *CQIₛ,* wherein five CQIs are *CQI*_{*n*-1}, *CQI*_{*n*-2}, ..., *CQI*_{*n*-5}, and then *CQIₛ* = (*CQI*_{*n*-1}+*CQI*_{*n*-2}+...+ *CQI*_{*n*-5}).
Step 303: judge the monotonicity of the CQI sequence, and when the five CQIs: *CQI*_{*n*-1}, *CQI*_{*n*-2}, ..., *CQI*_{*n*-5} are monotonically decreasing according to the time sequence, proceed to step 304; when the five CQIs: *CQI*_{*n*-1}, *CQI*_{*n*-2}, ..., *CQI*_{*n*-5} are monotonically increasing according to the time sequence, proceed to step 305; when they have no monotonicity, proceed to step 306.
   Herein, when *CQI*_{*n*-1}<*CQI*_{*n*-2}<...<*CQI*_{*n*-5}, that is, the five CQIs are monotonically decreasing according to the time sequence, proceed to step 304, when *CQI*_{*n-*1}>*CQI*_{*n*-2}>...>*CQI*_{*n*-5}, that is, the five CQIs are monotonically increasing according to the time sequence, proceed to step 305; when *CQI*_{*n*-1}, *CQI*_{*n*-2}, ...,*CQI*_{*n*-5} have no monotonicity, for example, *CQI*_{*n*-1}<*CQI*_{*n*-2}, while *CQI*_{*n*-3}>*CQI*_{*n*-4}, proceed to step 306. wherein, the initial values of *CQI*_{*n*-1}, *CQI*_{*n*-2}, ...,*CQI*_{*n*-5} are all set as 10. Therefore, when N=1, 2, 3, 4, or 5, the corresponding *CQI*_{*n*-1}, *CQI*_{*n*-2}, ...,*CQI*_{*n*-5} have their own values.
Step 304: compare *CQIₙ* with *CQIₛ*, and the smaller one is taken as the expected CQI *CQI*'*ᵤₛₑ*(*n*), that is, *CQI*'*ᵤₛₑ*(*n*) = min(*CQIₙ*,*CQIₛ*). Proceed to step 307.
Step 305, compare *CQIₙ* with *CQIₛ,* and the larger one is taken as the expected CQI *CQI*'*ᵤₛₑ*(*n*), that is, *CQI'ᵤₛₑ*(*n*) = max(*CQIₙ*,*CQIₛ*). Proceed to step 307.
Step 306: Take *CQIₛ* as the expected CQI *CQI*'*ᵤₛₑ*(*n*), that is, *CQI*'*ᵤₛₑ*(*n*) = *CQIₛ*. Proceed to step 307.
Step 307: Judge whether the difference of the expected CQI *CQI'ᵤₛₑ*(*n*) and the CQI *CQIᵤₛₑ*(*n*-1) used by the Node B in the previous period is larger than K or not, that is, whether *CQI*'*ᵤₛₑ*(*n*) - *CQI ᵤₛₑ*(*n*-1)>4 or not, and if yes, there is evident CQI decoding error. Proceed to step 308, otherwise proceed to step 309.
Step 308: Determine the sum of the preset value and the CQI used in the previous scheduling period as the CQI used in the current scheduling period, that is, *CQIᵤₛₑ*(*n*) = *CQIᵤₛₑ*(*n*-1) + *K*. The process of filtering CQI is completed.
Step 309: Determine the expected CQI as the CQI used in the current scheduling period, that is, *CQIᵤₛₑ*(*n*) = *CQI*'*ᵤₛₑ*(*n*). The process of filtering CQI is completed.

After determining the *CQIᵤₛₑ*(*n*) used in the current scheduling period, the Node B selects a suitable transmission block to send data to the UE via the HS-PDSCH according to the determined *CQIᵤₛₑ*(*n*), and the corresponding control information is sent in the HS-SCCH to implement the HSDPA data transmission.

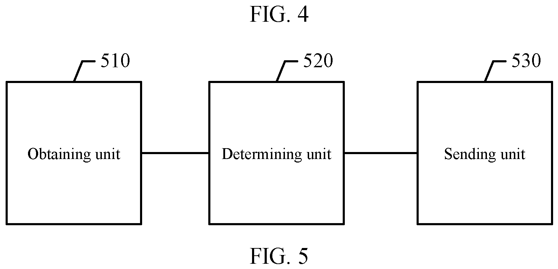

According to the abovementioned method for filtering the CQI, an apparatus for filtering CQI can be designed, and the apparatus is located in the Node B, refer to FIG. 4, the apparatus comprises the decoding unit 100, the obtaining unit 200, the first determining unit 300 and the second determining unit 400, wherein the decoding unit 100 is used to acquire the current CQI reported by the UE in the current scheduling period.

The obtaining unit 200 is used to obtain the average CQI of a CQI sequence, wherein said CQI sequence comprises at least two CQIs reported by the UE before the current scheduling period.

The first determining unit 300 is used to determine the expected CQI from said current CQI and the average CQI according to the variation characteristic of said CQI sequence.

The second determining unit 400 is used to determine the CQI used in the current scheduling period according to said expected CQI.

In this embodiment of the present invention, the first determining unit 300 comprises a judging subunit and a determining subunit.

The judging subunit is used to judge the monotonicity of said CQI sequence;

The determining subunit is used to determine the larger value in said current CQI and said average CQI as the expected CQI when said CQI sequence is monotonically increasing according to the time sequence; determine the smaller value in said current CQI and said average CQI as the expected CQI when said CQI sequence is monotonically decreasing according to the time sequence; otherwise, determine said average CQI as the expected CQI.

The second determining unit 400 can directly determine the expected CQI as the CQI used in the current scheduling period. Alternatively, the second determining unit comprises a comparing subunit and a determining subunit. Wherein, the comparing subunit is used to compare the preset value with the difference between said expected CQI and the CQI used in the previous scheduling period.

The determining subunit is used to: when said difference is larger than the preset value, determine the sum of the CQI used in the previous scheduling period and the preset value as the CQI used in the current scheduling period; when said difference is not larger than the preset value, determine said expected CQI as the CQI used in the current scheduling period.

An apparatus for data transmission is shown in FIG. 5, the apparatus comprises the obtaining unit 510, the determining unit 520 and the sending unit 530, wherein the obtaining unit 500 is used to obtain the current CQI reported by a UE in the current scheduling period and the average CQI of a CQI sequence, wherein, said CQI sequence comprises at least two CQIs reported by the UE before said current scheduling period.

The determining unit 520 is used to determine the expected CQI from said current CQI and the average CQI according to the variation characteristic of said CQI sequence; and determine the CQI used in the current scheduling period according to the expected CQI.

The sending unit 530 is used to use the transmission block corresponding to the CQI used in the current scheduling period to send data.

The determining unit 520 might comprise a judging subunit and a first determining subunit.

The judging subunit is used to judge the monotonicity of said CQI sequence.

The first determining subunit is used to: when said CQI sequence is monotonically increasing according to the time sequence, determine the larger value in said current CQI and said average CQI as the expected CQI; when said CQI sequence is monotonically decreasing according to the time sequence, determine the smaller value in said current CQI and said average CQI as the expected CQI; otherwise, determine said average CQI as the expected CQI.

The determining unit 520 might also comprise a comparing subunit and a second determining subunit.

The comparing subunit is used to compare the preset value with the difference between said expected CQI and the CQI used in the previous scheduling period; and the second determining subunit is used to: when said difference is larger than the preset value, determine the sum of the CQI used in the previous scheduling period and the preset value as the CQI used in the current scheduling period; otherwise, determine said expected CQI as the CQI used in the current scheduling period.

In the embodiments of the present invention, the apparatus for filtering CQI or the apparatus for data transmission can be a unit in the Node B.

To sum up, according to the embodiments of the present invention, in the HSDPA or HSPA+ system, when the Node B filters the CQI, after the current CQI *CQIₙ* reported by the UE in the current scheduling period is acquired, the average CQI *CQIₛ* of m CQIs reported by the UE before the current scheduling period. Thus the deviation in the CQI can be filtered.

Then the monotonicity processing is applied, according to the monotonicity of the CQI sequence consisting of m CQIs, the expected CQI *CQI'ᵤₛₑ*(*n*), is determined from *CQIₙ* and *CQIₛ,* thus the performance of handoff region in the HSDPA or HSPA+ system is improved.

Finally, maximum value processing can be applied, the CQI *CQIᵤₛₑ*(*n*) used in the current scheduling period is determined from the expected CQI *CQI*'*ᵤₛₑ*(*n*) and the CQI *CQIᵤₛₑ*(*n*-1) used in the previous scheduling period. Thus the evident CQI decoding error can be filtered.

Therefore, the method for filtering CQI in the embodiments of the present invention can effectively reduce the deviation in the CQI caused in the process of UE reporting CQI or the transmission of CQI, and also can filter the evident CQI decoding error, thus improve the CQI accuracy and HSDPA performance.

Of course, the people having ordinary skills in the art can make various modifications and transformation to the present invention without departing from the scope of the present invention. Thus the present invention intends to include these modifications and transformations if these modifications and transformations made to the present invention belong to the scope of the claims appended to the present invention and the equivalent technologies.

### Industrial Applicability

In the process of filtering CQI provided in the present invention, the current CQI reported by a UE in the current scheduling period is acquired, and the average CQI of a CQI sequence is acquired, wherein, said CQI sequence comprises at least two CQIs reported by the UE before said current scheduling period, the expected CQI is determined from the current CQI and the average CQI according to the variation characteristic of said CQI sequence, and finally, the CQI used in the current scheduling period is determined according to the expected CQI. Therefore, the deviation in CQI due to the reporting process by the UE and the transmission can be effectively reduced, and the CQI decoding error can be significantly filtered, thus to improve the accuracy of the CQI, and the HSDPA performance can be effectively improved after applying the transmission block corresponding to the CQI used in the current scheduling period to send the data.

## Claims

1. A method for filtering channel quality indicator comprising:
acquiring a current channel quality indicator reported by a user equipment in a current scheduling period (201, 301);
acquiring an average channel quality indicator of a channel quality indicator sequence (202, 302), wherein, said channel quality indicator sequence comprises at least two channel quality indicators reported by the user equipment before said current scheduling period;
determining an expected channel quality indicator from said current channel quality indicator and the average channel quality indicator according to variation characteristic of said channel quality indicator sequence (203); and
determining the channel quality indicator used in the current scheduling period according to the expected channel quality indicator (204);
wherein the method is **characterized in that** the step of determining the expected channel quality indicator comprises:
determining monotonicity of said channel quality indicator sequence; and
when said channel quality indicator sequence is monotonically increasing according to time sequence, determining the larger value in said current channel quality indicator and said average channel quality indicator as the expected channel quality indicator (305);
when said channel quality indicator sequence is monotonically decreasing according to the time sequence, determining the smaller value in said current channel quality indicator and said average channel quality indicator as the expected channel quality indicator (304);
when said channel quality indicator sequence is neither monotonically increasing nor monotonically decreasing according to the time sequence, determining said average channel quality indicator as the expected channel quality indicator (306).

2. The method of claim 1, wherein the method further comprises: applying a transmission block corresponding to the channel quality indicator used in the current scheduling period to send data.

3. The method of claim 1 or 2, wherein the step of determining the channel quality indicator used in the current scheduling period comprises:
comparing a preset value with a difference between said expected channel quality indicator and a channel quality indicator used in a previous scheduling period; and
when said difference is larger than the preset value, determining a sum of the channel quality indicator used in the previous scheduling period and the preset value as the channel quality indicator used in the current scheduling period;
when said difference is not larger than the preset value, determining said expected channel quality indicator as the channel quality indicator used in the current scheduling period.

4. An apparatus for filtering channel quality indicator comprising:
a decoding unit (100), configured to: acquire a current channel quality indicator reported by a user equipment in a current scheduling period;
an obtaining unit (200), configured to obtain an average channel quality indicator of a channel quality indicator sequence, wherein said channel quality indicator sequence comprises at least two channel quality indicators reported by the user equipment before the current scheduling period;
a first determining unit (300), configured to: determine an expected channel quality indicator from said current channel quality indicator and the average channel quality indicator according to variation characteristic of said channel quality indicator sequence; and
a second determining unit (400), configured to: determine the channel quality indicator used in the current scheduling period according to said expected channel quality indicator;
wherein the apparatus is **characterized in that** the first determining unit (300) comprises:
a judging subunit, configured to: judge monotonicity of said channel quality indicator sequence; and
a determining subunit, configured to: determine the larger value in said current channel quality indicator and said average channel quality indicator as the expected channel quality indicator when said channel quality indicator sequence is monotonically increasing according to time sequence; determine the smaller value in said current channel quality indicator and said average channel quality indicator as the expected channel quality indicator when said channel quality indicator sequence is monotonically decreasing according to the time sequence; determine said average channel quality indicator as the expected channel quality indicator when said channel quality indicator sequence is neither monotonically increasing nor monotonically decreasing according to the time sequence.

5. The apparatus of claim 4, wherein the apparatus further comprises: a sending unit, configured to: use a transmission block corresponding to the channel quality indicator used in the current scheduling period to send data.

6. The apparatus of claim 4 or 5, wherein the second determining unit comprises:
a comparing unit, configured to: compare a preset value with a difference between said expected channel quality indicator and a channel quality indicator used in a previous scheduling period; and
a determining subunit, configured to: when said difference is larger than the preset value, determine a sum of the channel quality indicator used in the previous scheduling period and the preset value as the channel quality indicator used in the current scheduling period; when said difference is not larger than the preset value, determine said expected channel quality indicator as the channel quality indicator used in the current scheduling period.

## Patentansprüche

1. Verfahren zum Filtern eines Kanalqualitätsindikators, das Folgendes umfasst:
Erfassen eines momentanen Kanalqualitätsindikators, der durch eine Nutzerausrüstung in einem momentanen Disponierungszeitraum berichtet wird (201, 301);
Erfassen eines durchschnittlichen Kanalqualitätsindikators einer Kanalqualitätsindikatorsequenz (202, 302), wobei die Kanalqualitätsindikatorsequenz mindestens zwei Kanalqualitätsindikatoren umfasst, die durch die Nutzerausrüstung vor dem momentanen Disponierungszeitraum berichtet werden;
Bestimmen eines erwarteten Kanalqualitätsindikators anhand des momentanen Kanalqualitätsindikators und des durchschnittlichen Kanalqualitätsindikators gemäß einer Variationscharakteristik der Kanalqualitätsindikatorsequenz (203); und
Bestimmen des Kanalqualitätsindikators, der in dem momentanen Disponierungszeitraum verwendet wird, gemäß dem erwarteten Kanalqualitätsindikator (204);
wobei das Verfahren **dadurch gekennzeichnet ist, dass** der Schritt zum Bestimmen des erwarteten Kanalqualitätsindikators Folgendes umfasst:
Bestimmen einer Monotonizität der Kanalqualitätsindikatorsequenz; und
wenn die Kanalqualitätsindikatorsequenz gemäß der Zeitsequenz monoton zunimmt, Bestimmen des größeren Wertes in dem momentanen Kanalqualitätsindikator und dem durchschnittlichen Kanalqualitätsindikator als den erwarteten Kanalqualitätsindikator (305);
wenn die Kanalqualitätsindikatorsequenz gemäß der Zeitsequenz monoton abnimmt, Bestimmen des kleineren Wertes in dem momentanen Kanalqualitätsindikator und dem durchschnittlichen Kanalqualitätsindikator als den erwarteten Kanalqualitätsindikator (304);
wenn die Kanalqualitätsindikatorsequenz gemäß der Zeitsequenz weder monoton zunimmt noch monoton abnimmt, Bestimmen des durchschnittlichen Kanalqualitätsindikators als den erwarteten Kanalqualitätsindikator (306).

2. Verfahren nach Anspruch 1, wobei das Verfahren des Weiteren Folgendes umfasst:
Anwenden eines Sendeblocks, der dem Kanalqualitätsindikator entspricht, der in dem momentanen Disponierungszeitraum verwendet, zum Senden von Daten.

3. Verfahren nach Anspruch 1 oder 2, wobei der Schritt zum Bestimmen des Kanalqualitätsindikators, der in dem momentanen Disponierungszeitraum verwendet wird, Folgendes umfasst:
Vergleichen eines voreingestellten Wertes mit einer Differenz zwischen dem erwarteten Kanalqualitätsindikator und einem Kanalqualitätsindikator, der in einem früheren Disponierungszeitraum verwendet wurde; und
wenn die Differenz größer ist als der voreingestellte Wert, Bestimmen einer Summe des Kanalqualitätsindikators, der in dem früheren Disponierungszeitraum verwendet wurde, und des voreingestellten Wertes als den Kanalqualitätsindikator, der in dem momentanen Disponierungszeitraum verwendet wird;
wenn die Differenz nicht größer ist als der voreingestellte Wert, Bestimmen des erwarteten Kanalqualitätsindikators als den Kanalqualitätsindikator, der in dem momentanen Disponierungszeitraum verwendet wird.

4. Vorrichtung zum Filtern eines Kanalqualitätsindikators, die Folgendes umfasst:
eine Decodiereinheit (100), die dafür konfiguriert ist, einen momentanen Kanalqualitätsindikator zu erfassen, der durch eine Nutzerausrüstung in einem momentanen Disponierungszeitraum berichtet wird;
eine Erhalte-Einheit (200), die dafür konfiguriert, einen durchschnittlichen Kanalqualitätsindikator einer Kanalqualitätsindikatorsequenz zu erhalten, wobei die Kanalqualitätsindikatorsequenz mindestens zwei Kanalqualitätsindikatoren umfasst, die durch die Nutzerausrüstung vor dem momentanen Disponierungszeitraum berichtet werden;
eine erste Bestimmungseinheit (300), die dafür konfiguriert ist, einen erwarteten Kanalqualitätsindikator anhand des momentanen Kanalqualitätsindikators und des durchschnittlichen Kanalqualitätsindikators gemäß einer Variationscharakteristik der Kanalqualitätsindikatorsequenz zu bestimmen; und
eine zweite Bestimmungseinheit (400), die dafür konfiguriert ist, den Kanalqualitätsindikator, der in dem momentanen Disponierungszeitraum verwendet wird, gemäß dem erwarteten Kanalqualitätsindikator zu bestimmen;
wobei die Vorrichtung **dadurch gekennzeichnet ist, dass** die erste Bestimmungseinheit (300) Folgendes umfasst:
eine Beurteilungs-Untereinheit, die dafür konfiguriert ist, eine Monotonizität der Kanalqualitätsindikatorsequenz zu beurteilen; und
eine Bestimmungs-Untereinheit, die dafür konfiguriert ist, den größeren Wert in dem momentanen Kanalqualitätsindikator und dem durchschnittlichen Kanalqualitätsindikator als den erwarteten Kanalqualitätsindikator zu bestimmen, wenn die Kanalqualitätsindikatorsequenz gemäß der Zeitsequenz monoton zunimmt; den kleineren Wert in dem momentanen Kanalqualitätsindikator und dem durchschnittlichen Kanalqualitätsindikator als den erwarteten Kanalqualitätsindikator zu bestimmen, wenn die Kanalqualitätsindikatorsequenz gemäß der Zeitsequenz monoton abnimmt; den durchschnittlichen Kanalqualitätsindikator als den erwarteten Kanalqualitätsindikator zu bestimmen, wenn die Kanalqualitätsindikatorsequenz gemäß der Zeitsequenz weder monoton zunimmt noch monoton abnimmt.

5. Vorrichtung nach Anspruch 4, wobei die Vorrichtung des Weiteren Folgendes umfasst:
eine Sendeeinheit, die dafür konfiguriert ist, einen Sendeblock, der dem Kanalqualitätsindikator entspricht, der in dem momentanen Disponierungszeitraum verwendet wird, zum Senden von Daten zu verwenden.

6. Vorrichtung nach Anspruch 4 oder 5, wobei die zweite Bestimmungseinheit Folgendes umfasst:
eine Vergleichseinheit, die dafür konfiguriert ist, einen voreingestellten Wert mit einer Differenz zwischen dem erwarteten Kanalqualitätsindikator und einen Kanalqualitätsindikator, der in einem vorherigen Disponierungszeitraum verwendet wurde, zu vergleichen; und
eine Bestimmungs-Untereinheit, die dafür konfiguriert ist, wenn die Differenz größer ist als der voreingestellte Wert, eine Summe des Kanalqualitätsindikators, der in dem früheren Disponierungszeitraum verwendet wurde, und dem voreingestellten Wert als den Kanalqualitätsindikator zu bestimmen, der in dem momentanen Disponierungszeitraum verwendet wird; wenn die Differenz nicht größer ist als der voreingestellten Wert, den erwarteten Kanalqualitätsindikator als den Kanalqualitätsindikator zu bestimmen, der in dem momentanen Disponierungszeitraum verwendet wird.

## Revendications

1. Procédé de filtrage d'indicateur de qualité de canal comprenant :
l'acquisition d'un indicateur de qualité de canal actuel rapporté par un équipement d'utilisateur dans une période de programmation actuelle (201, 301) ;
l'acquisition d'un indicateur de qualité de canal moyen d'une séquence d'indicateurs de qualité de canal (202, 302), dans lequel ladite séquence d'indicateurs de qualité de canal comprend au moins deux indicateurs de qualité de canal rapportés par l'équipement d'utilisateur avant ladite période de programmation actuelle ;
la détermination d'un indicateur de qualité de canal prévu à partir dudit indicateur de qualité de canal actuel et de l'indicateur de qualité de canal moyen en fonction d'une caractéristique de variation de ladite séquence d'indicateurs de qualité de canal (203) ; et
la détermination de l'indicateur de qualité de canal utilisé dans la période de programmation actuelle en fonction de l'indicateur de qualité de canal prévu (204) ;
dans lequel le procédé est **caractérisé en ce que** l'étape de la détermination de l'indicateur de qualité de canal prévu comprend :
la détermination d'une monotonie de ladite séquence d'indicateurs de qualité de canal ; et
lorsque ladite séquence d'indicateurs de qualité de canal augmente monotonement en fonction d'une séquence de temps, la détermination que la plus grande valeur parmi ledit indicateur de qualité de canal actuel et ledit indicateur de qualité de canal moyen est l'indicateur de qualité de canal prévu (305) ;
lorsque ladite séquence d'indicateurs de qualité de canal diminue monotonement en fonction de la séquence de temps, la détermination que la plus petite valeur parmi ledit indicateur de qualité de canal actuel et ledit indicateur de qualité de canal moyen est l'indicateur de qualité de canal prévu (304) ;
lorsque ladite séquence d'indicateurs de qualité de canal n'augmente pas monotonement et ne diminue pas monotonement en fonction de la séquence de temps, la détermination que l'indicateur de qualité de canal moyen est l'indicateur de qualité de canal prévu (306).

2. Procédé selon la revendication 1, dans lequel le procédé comprend en outre :
l'application d'un bloc de transmission correspondant à l'indicateur de qualité de canal utilisé dans la période de programmation actuelle pour envoyer des données.

3. Procédé selon la revendication 1 ou 2, dans lequel l'étape de la détermination de l'indicateur de qualité de canal utilisé dans la période de programmation actuelle comprend :
la comparaison d'une valeur préréglée à une différence entre ledit indicateur de qualité de canal prévu et un indicateur de qualité de canal utilisé dans une période de programmation précédente ; et
lorsque ladite différence est supérieure à la valeur préréglée, la détermination qu'une somme de l'indicateur de qualité de canal utilisé dans la période de programmation précédente et de la valeur préréglée est l'indicateur de qualité de canal utilisé dans la période de programmation actuelle ;
lorsque ladite différence n'est pas supérieure à la valeur préréglée, la détermination que ledit indicateur de qualité de canal prévu est l'indicateur de qualité de canal utilisé dans la période de programmation actuelle.

4. Appareil de filtrage d'indicateur de qualité de canal comprenant :
une unité de décodage (100) configurée pour : l'acquisition d'un indicateur de qualité de canal actuel rapporté par un équipement d'utilisateur dans une période de programmation actuelle ;
une unité d'obtention (200) configurée pour l'obtention d'un indicateur de qualité de canal moyen d'une séquence d'indicateurs de qualité de canal, dans lequel ladite séquence d'indicateurs de qualité de canal comprend au moins deux indicateurs de qualité de canal rapportés par l'équipement d'utilisateur avant la période de programmation actuelle ;
une première unité de détermination (300) configurée pour : la détermination d'un indicateur de qualité de canal prévu à partir dudit indicateur de qualité de canal actuel et de l'indicateur de qualité de canal moyen en fonction d'une caractéristique de variation de ladite séquence d'indicateurs de qualité de canal ; et
une deuxième unité de détermination (400) configurée pour : la détermination de l'indicateur de qualité de canal utilisé dans la période de programmation actuelle en fonction dudit indicateur de qualité de canal prévu ;
dans lequel l'appareil est **caractérisé en ce que** la première unité de détermination (300) comprend :
une sous-unité de jugement configurée pour : le jugement d'une monotonie de ladite séquence d'indicateurs de qualité de canal ; et
une sous-unité de détermination configurée pour : la détermination que la plus grande valeur parmi ledit indicateur de qualité de canal actuel et ledit indicateur de qualité de canal moyen est l'indicateur de qualité de canal prévu lorsque ladite séquence d'indicateurs de qualité de canal augmente monotonement en fonction d'une séquence de temps ; la détermination que la plus petite valeur parmi ledit indicateur de qualité de canal actuel et ledit indicateur de qualité de canal moyen est l'indicateur de qualité de canal prévu lorsque ladite séquence d'indicateurs de qualité de canal diminue monotonement en fonction de la séquence de temps ; la détermination que l'indicateur de qualité de canal moyen est l'indicateur de qualité de canal prévu lorsque ladite séquence d'indicateurs de qualité de canal n'augmente pas monotonement et ne diminue pas monotonement en fonction de la séquence de temps.

5. Appareil selon la revendication 4, dans lequel l'appareil comprend en outre :
une unité d'envoi configurée pour : l'utilisation d'un bloc de transmission correspondant à l'indicateur de qualité de canal utilisé dans la période de programmation actuelle pour envoyer des données.

6. Appareil selon la revendication 4 ou 5, dans lequel la deuxième unité de détermination comprend :
une unité de comparaison configurée pour : la comparaison d'une valeur préréglée à une différence entre ledit indicateur de qualité de canal prévu et un indicateur de qualité de canal utilisé dans une période de programmation précédente ; et
une sous-unité de détermination configurée pour : lorsque ladite différence est supérieure à la valeur préréglée, la détermination qu'une somme de l'indicateur de qualité de canal utilisé dans la période de programmation précédente et de la valeur préréglée est l'indicateur de qualité de canal utilisé dans la période de programmation actuelle ; lorsque ladite différence n'est pas supérieure à la valeur préréglée, la détermination que ledit indicateur de qualité de canal prévu est l'indicateur de qualité de canal utilisé dans la période de programmation actuelle.
